# EUROPÄISCHE PATENTSCHRIFT

(11) **EP 1 638 668 B1**
(45) Veröffentlichungstag und Bekanntmachung des Hinweises auf die Patenterteilung: **21.02.2007**
(21) Anmeldenummer: 04738710.5
(22) Anmeldetag: 17.06.2004
(51) Int. Cl.: B01D 53/04, F02M 25/08

(54) **ADSORPTIONSFILTER FÜR KRAFTSTOFFDÄMPFE**
ADSORPTION FILTER FOR FUEL VAPORS
FILTRE D'ADSORPTION DE VAPEURS DE CARBURANT

(30) Priorität: 28.06.2003 DE 10329200
(43) Veröffentlichungstag der Anmeldung: 29.03.2006
(73) Patentinhaber: MAHLE Filtersysteme GmbH, 70376 Stuttgart (DE)
(72) Erfinder: REINERS, Frank, 71332 Waiblingen (DE); ZELßMANN, Dr. Hagen, 71083 Herrenberg (DE)
(74) Vertreter: Pfusch, Volker
(86) Internationale Anmeldenummer: PCT/DE2004/001259
(87) Internationale Veröffentlichungsnummer: WO 2005/005022

(56) Entgegenhaltungen:
- WO-A-01/93985
- FR-A- 2 847 586
- US-A- 4 971 605
- US-A- 5 861 050

## Beschreibung

Die Erfindung betrifft ein Adsorptionsfilter nach dem Oberbegriff des Patentanspruchs 1.

Ein solches Filter ist aus US 58 61 050 A bekannt. Ähnliche Filterausführungen offenbaren US2002/01 74 857 A1, US2001/00 20 418 A1, EP 1 113 163 A2, JP 63-2 46 462 A und JP 10-3 39 218 A.

Die Erfindung beschäftigt sich mit dem Problem, die wärmespeichernde Wirkung der wärmespeichernden Substanzen zu erhöhen. Darüber hinaus soll die desorbierende Eigenschaft des Filtermaterials bei der Regeneration des Filters im Bereich des Rückspülgaseintritts verbessert werden.

Gelöst wird dieses Problem in erster Linie durch ein gattungsgemäßes Adsorptionsfilter mit einer Ausbildung nach dem kennzeichnenden Merkmal des Patentanspruchs 1.

Vorteilhafte und zweckmäßige Ausgestaltungen sind Gegenstand der Unteransprüche.

Die Erfindung beruht auf dem allgemeinen Gedanken, durch den Einsatz an sich bekannter Phasenwechselmaterialien die Wärmespeicherfähigkeit der wärmespeichernden Substanzen bei einem Adsorptionsfilter für Kraftstoffdämpfe aus insbesondere dem Tankbehälter eines insbesondere Verbrennungsmotors eines Kraftfahrzeuges erheblich zu erhöhen.

Ein bekanntes Phasenwechselmaterial ist beispielsweise Wachs. Unter Wärmezufuhr schmilzt das Wachs. Dabei nutzt das Wachs die zugeführte Wärme dazu, die Bindungen seiner Moleküle zu lösen anstatt seine Temperatur zu erhöhen. In verflüssigtem Wachs ist nicht Wärme, sondern frei gewordene Bindungsenergie gespeichert, die beim Erstarren, also beim Phasenwechsel von flüssig zu fest, wieder als Wärme abgegeben wird. Aus WO 99/64223 ist es bekannt, Schaumstoffe mit granulatförmigem Phasenwechselmaterial zu durchsetzen, um durch äußere Einflüsse bewirkte Temperaturschwankungen in solchen Schaumstoffen auszugleichen bzw. zu dämpfen.

Um zu speichernde Wärme schnell und gut aufnehmen zu können, werden gattungsgemäß eingesetzte Phasenwechselmaterialien vorzugsweise als kleine Kügelchen mit Durchmessern in einem Bereich von etwa 10 µm eingesetzt. Bei Wachs als Phasenwechselmaterial ist dieses in einer Hülle mit einer Dicke von lediglich etwa 200 nm gekapselt.

Die Beaufschlagung mit Phasenwechselmaterial kann in Durchströmrichtung des Adsorptionsfilters mengenmäßig variieren, um ein unterschiedliches Betriebsverhalten über die Länge des Adsorptionsfilters erhalten zu können.

Phasenwechselmaterial kann je nach gewählter Art Schmelztemperaturen, das heißt Phasenwechseltemperaturen, bei unterschiedlich hohen Werten aufweisen, die zwischen etwa 5 und 70°C liegen können.

Bei einer besonders vorteilhaften Ausgestaltung der Erfindung wird in Durchströmrichtung des Adsorptionsfilters Phasenwechselmaterial mit unterschiedlichen Phasenwechseltemperaturgrenzen eingesetzt.

Dabei hat es sich als vorteilhaft erwiesen, in Strömungsrichtung des Filters (bei Adsorptionsbetrieb) Phasenwechselmaterial mit temperaturwertmäßig zunehmenden Phasenwechselgrenzen einzusetzen. Der Vorteil liegt hierbei darin, dass in dem Filter zu adsorbierender Kraftstoffdampf im eintrittseitigen Bereich des Filters während einer Zeitdauer, in dem das Phasenwechselmaterial noch nicht vollständig aufgeschmolzen ist, bei einer möglichst niedrigen, für eine hohe Adsorptionswirkung günstigen Temperatur adsorbiert werden kann. Bei einer während einer lediglich relativ kurzen Zeitdauer wie beispielsweise bei einer Tankbefüllung erfolgenden Beaufschlagung mit zu adsorbierendem Kraftstoffdampf wird durch den Wärmeentzug, der durch das Schmelzen des Phasenwechselmaterials erfolgt, auch die Endtemperatur des Filtermaterials in diesem Bereich relativ niedrig gehalten. Denn auch, wenn nach vollständigem Aufschmelzen des Phasenwechselmaterials der Adsorptionsprozess noch für eine nicht zu lange Zeitdauer weiterläuft, bleibt mit Bezug auf die Endtemperatur die von dem Phasenwechselmaterial aufgenommene Schmelzwärme als temperatursenkender Einfluss erhalten.

In dem im Adsorptionsbetrieb des Filters austrittseitigen Bereich des Filters soll an sich kein adsorptionsfähiger Kraftstoffdampf mehr enthalten sein, das heißt dieser Bereich soll im wesentlichen als Sicherheitszone für ungünstige Extremsituationen dienen. Zu adsorbierende Kraftstoffdämpfe fallen insbesondere bei einer Befüllung des Tankes an, wobei dieser Vorgang auf eine relativ kurze Zeit beschränkt ist. Ein bei einer Kraftstofftankbefüllung mit Kraftstoffdampf beaufschlagtes Adorptionsfilter, bei dem der Kraftstoffdampf adsorbiert ist, wird bei laufendem Motor durch Rückspülung mit Frischluft regeneriert. Für ein Regenerieren, das heißt für eine Desorption, ist eine möglichst hohe Temperatur des reaktionsfähigen Filtermaterials günstig. Phasenwechselmaterial mit einer relativ hohen Umwandlungstemperaturbereich von beispielsweise 60 bis 70°C hat, wenn es im frischluftseitigem Endbereich des Filters angeordnet ist, folgenden Vorteil.

Wird das Adsorptionsfilter bei einem besonders langen Betankungsvorgang und gleichzeitig ungünstigen Adsorptionsverhältnissen bis in den frischluftseitigen Endbereich, der eigentlich als Sicherheitsbereich kraftstoffdampffrei bleiben soll, mit Kraftstoffdampf relativ hoch beaufschlagt, dann kann das dortige Filtermaterial Temperaturen bis beispielsweise etwa 75°C annehmen. Bei Phasenwechselmaterial mit einer Umwandlungstemperatur zwischen 60 und 70 °C schmilzt dieses Material bei einer solchen Filterbeaufschlagung auf, wodurch danach entsprechende Latentwärme in dem frischluftseitigen Filterbereich gespeichert ist. Diese Latentwärme wirkt sich bei einer zeitlich direkt nach der Beaufschlagung mit Kraftstoff erfolgenden Rückspülung des Adsorptionsfilters durch beispielsweise einen Motorbetrieb günstig dahingehend aus, dass diese Latentwärme während des Desorptionsprozesses beim Rückspülen rückgewonnen werden kann. Damit bleibt eine relativ hohe, für die Desorption günstige Temperatur in dem frischluftseitigen Bereich des Adsorptionsfilters erhalten.

Mit Bezug auf den frischluftseitigen Endbereich des Adsorptionsfilter kann es allerdings auch von Vorteil sein, hier ein Phasenwechselmaterial mit einer relativ niedrigen Umwandlungstemperatur von beispielsweise etwa 20 bis 30°C einzusetzen. Ein solcher Vorteil ergibt sich dann, wenn bei, einer langsamen Verdampfung von Kraftstoff aus dem Tank der Kraftstoffdampf langsam durch das Filter zur Frischluftseite difundiert. Ein solcher Fall liegt beispielsweise vor, wenn ein Fahrzeug betankt ist und längere Zeit ruht und zwar insbesondere bei hohen Umgebungstemperaturen. Bei einer solchen Adsorption werden bis in den frischluftseitigen Bereich des Filters hinein keine hohen Temperaturen erreicht. Liegt in einem solchen Anwendungsfall die Umwandlungstemperatur unterhalb der Umgebungstemperatur, kann bei einem Rückspülen des Adsorptionsfilters durch beispielsweise einen Motorbetrieb das bei der Umgebungstemperatur aufgeschmolzene Phasenwechselmaterial bei der Desorption seine gespeicherte Schmelzwärme abgeben, wodurch die Temperaturabsenkung während des Desorptionsvorganges entsprechend verringert wird.

Da die beiden vorstehend beschriebenen Anwendungsfälle in der Praxis auftreten können, kann es von Vorteil sein, in dem frischluftseitigen Endbereich des Filters eine Mischung aus Phasenwechselmaterial mit einer einerseits relativ hohen und andererseits einer relativ niedrigen Umwandlungstemperatur gleichzeitig einzusetzen.

Während es grundsätzlich möglich ist, dass über die Strömungslänge des Adsorptionsfilters Phasenwechselmaterial mit praktisch stetig zunehmender temperaturmäßiger Phasenwechselgrenze eingesetzt wird, ist es selbstverständlich ebenfalls möglich und häufig sogar äußerst vorteilhaft, aneinandergrenzende größere Bereiche jeweils mit Phasenwechselmaterial einer bestimmten Phasenwechseltemperatur zu belegen, das heißt die Phasenwechseltemperatur stufenweise in aufeinander folgenden Bereichen zu erhöhen. Dabei kann es bereits ausreichend sein, lediglich zwei getrennte Bereiche mit unterschiedlichen Phasenwechseltemperaturen des Phasenwechselmaterials vorzusehen.

Um eine möglichst rasche Wärmespeicherung vornehmen zu können, liegt das Phasenwechselmaterial in äußerst kleinen Granulatformen vor, nämlich beispielsweise in Form von Kügelchen von Durchmessern mit lediglich etwa 10 µm. Bei einem lediglich losen Einbringen der Kügelchen in beispielsweise ein körniges Aktivkohlebett besteht die Gefahr, dass die kleinen Kügelchen sich im Laufe der Betriebszeit entmischen. Zur Vermeidung wird das körnige beziehungsweise kugelige, in der Form kleiner Kapseln vorliegende Phasenwechselmaterial mechanisch zu größeren Einheiten zusammengefasst. Dies kann beispielsweise durch eine insbesondere poröse Umhüllung geschehen, wobei die Umhüllung von einem Schlauch abgelängte Abschnitte oder einzelne Kissenbezüge sein können. Die Kapseln können auch unter Verwendung von Haftmitteln untereinander und/oder mit dem reaktionsfähigen Filtermaterial verbunden werden oder auf folienförmiges Einlagematerial, das insbesondere porös sein kann, haftend aufgebracht werden.

Die größeren Einheiten, zu denen das feinkörnige, kapselartig vorliegende Phasenwechselmaterial zusammengefasst ist, können als Pellets bezeichnet werden. Die Größe dieser Pellets entspricht in etwa der Größe, die die Körner des granulatförmigen Adsorptionsmaterials besitzen. Größenabweichungen können bei etwa +/- 10 bis 20 % liegen. Übliche Korndurchmesser granulatförmigen Adsorptionsmaterials in Adsorptionsfiltern für Kraftstoffdämpfe liegen zwischen etwa 1 - 3 mm. Bei stäbchenförmiger Ausbildung des Adsorptionsmaterials können bei gleichen Durchmessern Längen von bis zu 5 - 10 mm vorliegen.

Um bei in und zu den aus einzelnen, kleinsten Kapseln aus Phasenwechselmaterial bestehenden Pellets einen besonders guten Wärmeübergang bzw. Wärmetausch zu erhalten, können in die Pellets gut wärmeleitende Füllstoffe eingebracht werden. In Form und Größe können die Füllstoffe in etwa mit den Phasenwechselmaterial-Kapseln übereinstimmen. Das Füllstoffmaterial besitzt praktisch die Funktion eines "Wärmeleitfähigkeitsbeschleunigers" und kann beispielsweise Graphitpulver oder auch Aktivkohlepulver sein, wobei eingesetzte Aktivkohle hier unabhängig von ihrer adsorptiven Wirkung verwendet wird. Einsetzbar als Füllstoff sind auch gute wärmeleitende Materialien aus Metall.

An sich wären für einen erfindungsgemäßen Einsatz aus Wärmeübertragungsgründen kleine Pellets besonders vorteilhaft, da das Phasenwechselmaterial in ihnen in dieser Form die gewünschten Zustandsänderungen am besten absolvieren könnte. Nachteile sehr kleiner Pellets bestehen jedoch darin, dass solche Pellets einerseits zu einem erhöhten Druckverlust innerhalb des Adsorptionsmaterials führen und sich andererseits innerhalb des Adsorptionsmaterials leicht entmischen können. Gut wärmeleitfähiges Füllmaterial enthaltende Pellets können durch Verwendung von Bindematerial aus Phasenwechselmaterial-Kapseln und Füllmaterial hergestellt werden. Das Bindematerial kann in einem Anteil von etwa 5 - 10 % vorliegen und selbst ebenfalls als gut wärmeleitendes Material dienen.

Ein anschließend noch näher erläutertes, besonders vorteilhaftes Ausführungsbeispiel ist in der Zeichnung dargestellt.

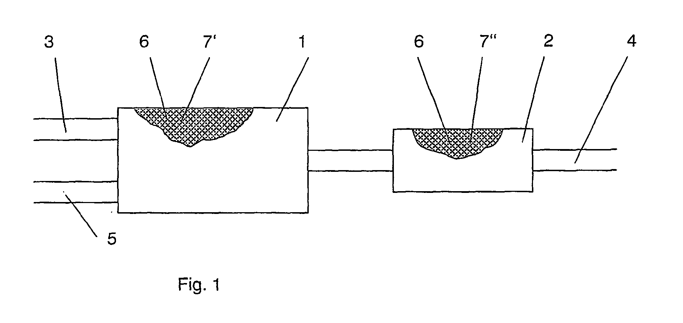

In dieser zeigt die einzige
- Fig. 1: ein Adsorptionsfilter in schematischer Darstellung im Längsschnitt.

Ein Adsorptionsfilter besteht aus zwei miteinander verbundenen Kammern 1 und 2. Während die Kammer 1 kraftstoffdampfseitig liegt, grenzt die Kammer 2 an die Frischluftseite mit Bezug auf die Durchströmungsrichtung des Adsorptionsfilters an.

Kraftstoffdampfseitig führt eine von einem Kraftstofftank ausgehende Leitung 3 in die erste Kammer 1. Frischluftseitig verbindet ein Stutzen 4 die zweite Kammer 2 mit der Atmosphäre. Kraftstoffdampfseitig führt eine Leitung 5 aus der Kammer 1 zur Verbrennungsluft des Motors, dem das Adsorptionsfilter zugeordnet ist.

Im Adsorptionsbetrieb wird das Filter von durch die Leitung 3 in die Kammer 1 einströmendem Kraftstoffdampf durchströmt, der die Kammer 2 über den Stutzen 4 verlässt.

Im Desorptionsbetrieb, das heißt beim Regenerieren des Filters, tritt Frischluft durch den Stutzen 4 in die Kammer 2 ein und verlässt die Kammer 1 über die Leitung 5, um sodann der Verbrennungsluft des Motors beigefügt zu werden.

Das reaktionsfähige Filtermaterial ist Aktivkohle, die in der Form von Körnern 6 vorliegt. Beigemischt ist den Körnern 6 der Aktivkohle als Phasenwechselmaterial -7', 7 " Wachs, das in der Form zu größeren Pellets zusammengefasster, winziger umhüllter Kügelchen vorliegt. Diese Pellets können insbesondere zusätzliches, gut leitendes Füllmaterial mit einem Volumenanteil von etwa 5 bis 15 % enthalten. Für den Zusammenhalt der einzelnen Komponenten innerhalb der Pellets kann ein Bindemittel vorgesehen sein und zwar mit einem Anteil von etwa 5 bis 10 %.

Das in der Kammer 1 eingesetzte Phasenwechselmaterial 7' besitzt eine Phasenwechseltemperatur von ca. 30°C, während dasjenige Material 7", das sich in der Kammer 2 befindet, eine Phasenwechseltemperatur von ca. 60 bis 70°C aufweist. Der Volumenanteil des Phasenwechselmaterials beträgt in beiden Kammern mit Bezug auf die Aktivkohle etwa 20%. Die Aktivkohle liegt in Granulatform mit Partikeldurchmessern von etwa 1 bis 3 mm Korndurchmesser bei Kugelform der Partikel vor. Besitzen die Partikel Stäbchenform können diese bei ebenfalls einem Durchmesser zwischen etwa 1 und 3 mm bis zu 5 bis 10 mm lang sein.

## Patentansprüche

1. Adsorptionsfilter für Kraftstoffdämpfe aus insbesondere dem Tankbehälter eines insbesondere Verbrennungsmotors eines Kraftfahrzeuges, das durch desorptive Gegenstrom-Rückspülung regenerierbar ist und bei dem das ad- beziehungsweise desorbierende Filtermaterial wärmespeichernde Substanzen aus Phasenwechselmaterial (PCM-Material = Phase-Change-Material) aufweist,
**dadurch gekennzeichnet,**
**dass** das Phasenwechselmaterial (7', 7") in kleinen Einheiten innerhalb des reaktionsfähigen Filtermaterials verteilt vorliegt und in Durchströmrichtung des Adsorptionsfilters temperaturmäßig unterschiedliche Phasenwechselgrenzen aufweist.

2. Adsorptionsfilter nach Anspruch 1,
**dadurch gekennzeichnet,**
**dass** die Temperaturwerte der Phasenwechselgrenzen bei der Adsorptionsfunktion des Filters stromab zunehmen.

3. Adsorptionsfilter nach Anspruch 1 oder 2,
**dadurch gekennzeichnet,**
**dass** stromab mindestens zwei Filterbereiche mit PCM-Material temperaturmäßig unterschiedlich hoher Phasenwechselgrenzen vorliegen.

4. Adsorptionsfilter nach einem der vorhergehenden Ansprüche,
**dadurch gekennzeichnet,**
**dass** in einem stromab des Adsorptionsfilters liegenden Endbereich gleichzeitig Phasenwechselmaterial mit unterschiedlichen Phasenwechseltemperaturen vorliegt.

## Claims

1. An adsorption filter for fuel vapors from the tank container in particular of an internal combustion engine in particular of a motor vehicle, said filter being regenerable by desorptive countercurrent backflushing and in which the adsorptive and/or desorptive filter material has heat-storing substances comprised of phase change material (PCM material = phase change material),
**characterized in that**
the phase change material (7', 7") is provided in the form of small units distributed within the reactive filter material and has phase change limits that are different with regard to temperature in the direction of flow through the adsorption filter.

2. The adsorption filter according to Claim 1,
**characterized in that**
the temperature values of the phase change limits in the adsorption function increase downstream from the filter.

3. The adsorption filter according to Claim 1 or 2,
**characterized in that**
downstream from at least two filter areas with PCM material, there are different phase change limits with regard to the temperature.

4. The adsorption filter according to any one of the preceding claims,
**characterized in that**
phase change materials having different phase change temperatures are present at the same time in an end area downstream from the adsorption filter.

## Revendications

1. Filtre à adsorption pour vapeurs de carburant provenant en particulier du réservoir de carburant en particulier d'un moteur à combustion interne d'un véhicule automobile, qui peut être régénéré par désorption en rétrolavage à contre-courant et dans lequel le matériau filtrant adsorbant ou désorbant comprend des substances accumulant la chaleur en matériau à changement de phases (PCM-material = Phase-Change-Material),
**caractérisé en ce**
**que** le matériau à changement de phases (7', 7") se présente sous forme répartie en petites unités à l'intérieur du matériau filtrant réactif et présente des limites de changement de phases variables en fonction des températures dans la direction de traversée du filtre à adsorption.

2. Filtre à adsorption selon la revendication 1,
**caractérisé en ce**
**que** les valeurs de température des limites de changement de phases augmentent vers l'aval, lors de la fonction adsorption du filtre.

3. Filtre à adsorption selon la revendication 1 ou 2,
**caractérisé en ce**
**qu'**il existe en aval au moins deux zones de filtrage à matériau PCM ayant des limites différentes de changement de phases en fonction des températures.

4. Filtre à adsorption selon l'une des revendications précédentes,
**caractérisé en ce**
**que** dans une zone d'extrémité située en aval du filtre à adsorption se trouve simultanément du matériau à changement de phases ayant différentes températures de changement de phases.
